# EUROPÄISCHE PATENTSCHRIFT

(11) **EP 3 878 761 B1**
(45) Veröffentlichungstag und Bekanntmachung des Hinweises auf die Patenterteilung: **24.08.2022**
(21) Anmeldenummer: 21154038.0
(22) Anmeldetag: 28.01.2021
(51) Int. Cl.: B65C 3/06, B29C 63/00, B29C 63/42, B65C 9/40

(54) **VORRICHTUNG UND VERFAHREN ZUM ANBRINGEN VON SCHRUMPFETIKETTEN AN BEHÄLTERN**
APPARATUS AND METHOD FOR ATTACHING SHRINK SLEEVES TO CONTAINERS
DISPOSITIF ET PROCÉDÉ D'APPLICATION DES ÉTIQUETTES THERMORÉTRACTABLES SUR DES RÉCIPIENTS

(30) Priorität: 09.03.2020 DE 102020106384
(43) Veröffentlichungstag der Anmeldung: 15.09.2021
(73) Patentinhaber: Maier Packaging GmbH, 83346 Bergen (DE)
(72) Erfinder: HUTTER, Alban, 83242 Reit im Winkl (DE)
(74) Vertreter: Reinhardt, Markus

(56) Entgegenhaltungen:
- WO-A1-2016/027286
- JP-A- 2012 131 537
- US-A1- 2006 027 304
- US-A1- 2020 017 251

## Beschreibung

Die vorliegende Erfindung betrifft eine Vorrichtung und ein Verfahren zum Anbringen von Schrumpfetiketten an Behältern nach dem Oberbegriff der Patentansprüche 1 und 7.

### STAND DER TECHNIK

Aus der WO 2016/027286 A1 ist eine Vorrichtung und ein Verfahren nach dem Oberbegriff der Patentansprüche 1 und 7 bekannt und beschreibt eine Maschine, die jeweils auf eine Reihe von solchen Behältern mittels eines Applikators die Schrumpfetiketten aufbringt, wobei diese Reihe von Behältern in Transportrichtung der Behälter angeordnet ist. Desweiteren wird in diesem Stand der Technik offenbart, dass mehrere solche Reihen von Behältern nebeneinander durch jeweils einen zugeordneten Applikator die Schrumpfetiketten appliziert erhalten. Pro Reihe von Behältern ist ein Applikator vorgesehen. Die Applikatoren sind statisch und die Reihe von Behältern muss jeweils mittels eines Transportsystems an die Position des zugeordneten Applikators verlagert werden. Um einen hohen Durchsatz von Behältern durch die Maschine zu erreichen, müssen eine große Mehrzahl von Applikatoren und dementsprechend Reihen von Behältern vorgesehen werden. Wird bei einer solchen Maschine zum Beispiel das Schrumpfetikett (Produktinhalt ändert sich von Erdbeerjoghurt zu Vanillejoghurt) geändert, fallen Behälter an, die das falsche Schrumpfetikett aufweisen. Auch an Verbindungsstellen, genannt Splice, der Folienrollen für die Schrumpfetiketten fallen Folienreste an, die jedoch bereits auf die Behälter aufgeschrumpft worden sind, so dass die Behälter mit den falschen oder fehlerhaften Schrumpfetiketten ausgeschleust werden müssen. Das Ausschleusen der fehlerhaften Behälter ist mit dieser bekannten Maschine aufwendig.

US 2020/017251 wird als Stand der Technik angesehen, und beschreibt eine Vorrichtung zum Anbringen von Schrumpfetiketten an Behältern, und ein Verfahren zum Anbringen eines Schrumpfetikettes an einem Behälter.

Es ist die Aufgabe der vorliegenden Erfindung, eine Vorrichtung und ein Verfahren zum Anbringen von Schrumpfetiketten an Behältern zur Verfügung zu stellen, bei der bzw. dem einerseits das Ausschleusen der falschen oder fehlerhaften Schrumpfetiketten vereinfacht ist sowie die Anzahl fehlerhafter Behälter praktisch auf Null reduziert ist.

Die Erfindung weist zur Lösung dieser Aufgabe die im Patentanspruch 1 und 7 angegebenen Merkmale auf. Vorteilhafte Ausgestaltungen hiervon sind in den weiteren Patentansprüchen 2 bis 6 und 8 bis 12 angegeben.

Erfindungsgemäß wird eine Vorrichtung zum Anbringen von Schrumpfetiketten an Behältern vorgeschlagen, mit einem Transportsystem zur Verlagerung der Behälter in den Arbeitsbereich zumindest eines Sleeverkopfes, der das Schrumpfetikett jeweils auf einen Behälter appliziert, wobei der Sleeverkopf in einer Richtung quer zur Transportrichtung verfahrbar ist, um jeden Behälter einer Reihe von Behältern nacheinander mit dem Schrumpfetikett zu versehen, wobei die Reihe von Behältern in Querrichtung zur Transportrichtung angeordnet ist und wobei der Sleeverkopf über die Reihe von Behältern in Richtung senkrecht zur Transportrichtung hinaus verlagerbar ist, um fehlerhafte Schrumpfetiketten auszuschleusen.

Bei bekannten Maschinen wird der Behälter mit dem fehlerhaften Schrumpfetikett versehen und muss später ausgeschleust werden; bei der vorliegenden Erfindung wird das fehlerhafte Schrumpfetikett vor der Applikation ausgeschleust.

Das erfindungsgemäße Verfahren zum Anbringen eines Schrumpfetikettes an einem Behälter umfasst die folgenden Schritte: Verlagerung einer Mehrzahl von Behältern in Transportrichtung, die in einer Reihe angeordnet sind, mittels eines Transportsystems in den Arbeitsbereich zumindest eines Sleeverkopfes; Aufbringen des Schrumpfetiketts auf jeweils einen Behälter, Verfahren (getaktet oder kontinuierlich) des Sleeverkopfes in einer Richtung quer zur Transportrichtung, um jeden Behälter einer Reihe von Behältern nacheinander mit dem Schrumpfetikett zu versehen, wobei die Reihe von Behältern in Querrichtung zur Transportrichtung angeordnet ist; getaktete oder kontinuierliche Wiederholung dieser Schritte, um die nächste Reihe von Behältern mit Schrumpfetiketten zu versehen.

Nach einer weiteren bevorzugten Ausführungsform der vorliegenden Erfindung zeichnet sich die Vorrichtung dadurch aus, dass in Transportrichtung hintereinander und parallel zueinander mindestens zwei Sleeverköpfe vorgesehen sind, die simultan mindestens zwei Reihen von Behältern mit Schrumpfetiketten versehen.

Nach Anspruch 6 werden die beiden oder mehreren Sleeverköpfe in Querrichtung gegenläufig verfahren, um Vibrationen an der Vorrichtung zu reduzieren.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert. Diese zeigen in:
Fig. 1 eine perspektivische Ansicht eines Teiles des Transportsystems für eine Reihe von Behältern, die jeweils mittels eines Sleeverkopfes mit jeweils einem Schrumpfetikett versehen werden; und
Fig. 2 eine perspektivische Ansicht einer weiteren bevorzugten Ausführungsform, in der zwei parallel zueinander verfahrbare und angeordnete Sleeverköpfe oberhalb des Transportsystems dargestellt sind.

### AUSFÜHRLICHE BESCHREIBUNG DER ZEICHNUNGEN

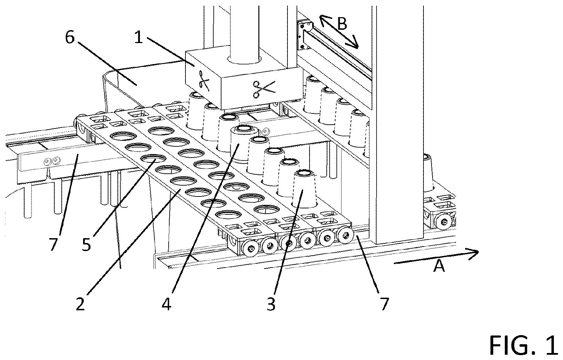

In der Figur 1 ist in einer perspektivischen Ansicht ein Teil der erfindungsgemäßen Vorrichtung zum Anbringen von Schrumpfetiketten 4 an Behältern 3 dargestellt. Mittels eines Transportsystems werden die Behälter 3 in Transportrichtung A mittels einer Mehrzahl von Zellenbrettern 2 verlagert, bis ein Zellenbrett 2 mit einer Reihe von Behältern 3 - in der Figur 1 sind acht Behälter 3 vorgesehen - unter einem Sleeverkopf 1 angeordnet ist. In den Zeichnungen weist jedes Zellenbrett 2 acht Aufnahmeöffnungen 5 auf, in denen jeweils ein Behälter 3 aufgenommen ist.

Die Behälter 3 können thermogeformte Behälter sein.

Dann verfährt der Sleeverkopf 1 in einer Querrichtung B zur Transportrichtung A und appliziert das Schrumpfetikett 4 auf jeden Behälter 3 in dieser Reihe.

Die Zellenbretter 2 werden beispielsweise mittels eines Linearmotors 7 kontrolliert in Transportrichtung A verlagert. Als Transportsystem kann auch ein Förderband oder ähnliches eingesetzt werden. Die zugeordnete Steuervorrichtung kontrolliert auch das Verfahren des Sleeverkopfes 1 in Querrichtung B. Wird von der Steuervorrichtung erkannt, dass ein Wechsel des Schrumpfetiketts 4 erfolgt, da sich zum Beispiel der Produktinhalt der Behälter 3 ändert, so wird der Sleeverkopf 1 in Querrichtung B über den Rand des Transportsystems verfahren, bis der Sleeverkopf 1 über einem Abfallbehälter 6 angeordnet ist, so dass die "falschen" Schrumpfetiketten 4 ausgeschleust werden. Anschließend verfährt die Steuervorrichtung den Sleeverkopf 1 zurück über die Reihe von Behältern 3 zum Aufbringen der geänderten Schrumpfetiketten 4 auf die Behälter 3 mit geändertem Produktinhalt. Der Sleeverkopf 1 wird zum Aufbringen der Schrumpfetiketten 4 auf jeden Behälter 3 oberhalb des Behälters 3 positioniert, danach wird das Schrumpfetikett 4 abgeworfen.

Dadurch, dass der Sleeverkopf 1 zum Behälter 3 verfahren wird, kann auch ein nicht stehfähiger Behälter 3 mit dem Schrumpfetikett 4 versehen werden.

Wird die Folie, aus der die Schrumpfetiketten 4 bestehen, gewechselt, so ist im Übergangsbereich (Splice) mit fehlerhaften Schrumpfetiketten 4 zu rechnen, die ebenso ausgeschleust werden und in den Abfallbehälter 6 fallen.

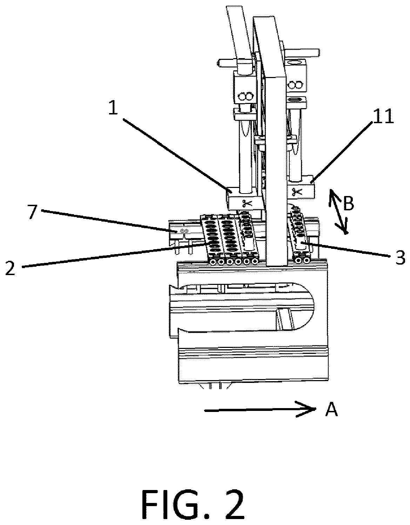

Eine weitere Ausführungsform einer erfindungsgemäßen Vorrichtung ist in der Figur 2 in einer perspektivischen Ansicht dargestellt. Dort sind in Querrichtung B zwei kontrolliert verfahrbare Sleeverköpfe 1 und 11 gezeigt, die parallel zueinander verfahren werden. Beide Sleeverköpfe 1 und 11 können über den Rand des Transportsystems hinaus verfahren werden, um fehlerhafte Schrumpfetiketten 4 auszuschleusen und in den Abfallbehälter 6 zu leiten. Um Vibrationen zu vermeiden, können die beiden Sleeverköpfe 1 und 11 gegenläufig durch die Steuervorrichtung in Querrichtung B verfahren.

Nicht zeichnerische dargestellt ist eine Ausführungsform mit 2-n Sleeverköpfen, um eine Maximierung der Bearbeitungsgeschwindigkeit zu erreichen.

## Patentansprüche

1. Vorrichtung zum Anbringen von Schrumpfetiketten (4) an Behältern (3), mit einem Transportsystem zur Verlagerung der Behälter (3) in den Arbeitsbereich zumindest eines Sleeverkopfes (1), der das Schrumpfetikett (4) jeweils auf einen Behälter (3) appliziert, **dadurch gekennzeichnet, dass** der Sleeverkopf (1) in einer Richtung (B) quer zur Transportrichtung (A) verfahrbar ist, um jeden Behälter (3) einer Reihe von Behältern (3) nacheinander mit dem Schrumpfetikett (4) zu versehen, wobei die Reihe von Behältern (3) in Querrichtung (B) zur Transportrichtung (A) angeordnet ist und wobei der Sleeverkopf (1) über die Reihe von Behältern (3) in Richtung (B) senkrecht zur Transportrichtung (A) hinaus verlagerbar ist, um fehlerhafte Schrumpfetiketten (4) auszuschleusen.

2. Vorrichtung nach Anspruch 1, **dadurch gekennzeichnet, dass** das Transportsystem Zellenbretter (2) aufweist, die eine Mehrzahl von Aufnahmeöffnungen (5) aufweisen, in denen jeweils ein Behälter (3) angeordnet ist.

3. Vorrichtung nach Anspruch 2, **dadurch gekennzeichnet, dass** das Transportsystem einen Linearmotor (7) umfasst, der die Zellenbretter (2) in Transportrichtung (A) kontrolliert verlagert.

4. Vorrichtung nach einem der Ansprüche 1 bis 3, **dadurch gekennzeichnet, dass** der Sleeverkopf (1) in Querrichtung (B) bis über einen Abfallbehälter (6) neben dem Transportsystem verfahrbar ist.

5. Vorrichtung nach einem der Ansprüche 1 bis 4, **dadurch gekennzeichnet, dass** in Transportrichtung (A) hintereinander und parallel zueinander mindestens zwei Sleeverköpfe (1, 11) vorgesehen sind, die simultan mindestens zwei Reihen von Behältern (3) mit Schrumpfetiketten (4) versehen.

6. Vorrichtung nach Anspruch 5, **dadurch gekennzeichnet, dass** die mindestens zwei Sleeverköpfe (1, 11) in Querrichtung (B) gegenläufig verfahren werden.

7. Verfahren zum Anbringen eines Schrumpfetikettes (4) an einem Behälter (3), mit den Folgenden Schritten:
a) Verlagerung einer Mehrzahl von Behältern (3) in Transportrichtung (A), die in einer Reihe angeordnet sind, mittels eines Transportsystems in den Arbeitsbereich zumindest eines Sleeverkopfes (1);
b) Aufbringen des Schrumpfetiketts (4) auf jeweils einen Behälter (3), **gekennzeichnet durch**
c) das Verfahren des Sleeverkopfes (1) in einer Richtung (B) quer zur Transportrichtung (A), um jeden Behälter (3) einer Reihe von Behältern (3) nacheinander mit dem Schrumpfetikett (4) zu versehen, wobei die Reihe von Behältern (3) in Querrichtung (B) zur Transportrichtung (A) angeordnet ist; und durch
d) die getaktete oder kontinuierliche Wiederholung der Schritte a) bis c), um die nächste Reihe von Behältern (3) mit Schrumpfetiketten (4) zu versehen.

8. Verfahren nach Anspruch 7, **gekennzeichnet durch**
e) die Verlagerung des Sleeverkopfes (1) über die Reihe von Behältern (3) in Richtung (B) senkrecht zur Transportrichtung (A) hinaus, um fehlerhafte Schrumpfetiketten (4) in einen Abfallbehälter (6) auszuschleusen.

9. Verfahren nach Anspruch 7 oder 8, **gekennzeichnet durch**
f) das Vorsehen mindestens eines zweiten Sleeverkopfes (11), der parallel zum ersten Sleeverkopf (1) verfährt, um Schrumpfetiketten (4) simultan zumindest auf eine zweite Reihe von Behältern (3) aufzubringen.

10. Verfahren nach Anspruch 9, **gekennzeichnet durch**
g) das gegenläufige Verfahren des zumindest zweiten Sleeverkopfes (11) relativ zum ersten Sleeverkopf (1).

11. Verfahren nach einem der Ansprüche 7 bis 9, **gekennzeichnet durch**
h) das Vorsehen von 2-n Sleeverköpfen, die parallel zueinander angeordnet sind, um Schrumpfetiketten (4) simultan auf 2-n Reihen von Behältern (3) aufzubringen.

12. Verfahren nach einem der Ansprüche 7, 8 und 10, **gekennzeichnet durch**
i) das Vorsehen von 2-n Sleeverköpfen, wobei die Sleeverköpfe der geraden Reihenanzahl gegenläufig zu den Sleeverköpfen der ungeraden Reihenanzahl verfahren.

## Claims

1. Device for attaching shrink sleeves (4) to containers (3), comprising a transport system for moving the containers (3) into the working region of at least one sleeving head (1) which applies the shrink sleeve (4) in each case to a container (3), **characterized in that** the sleeving head (1) can move in a direction (B) transverse to the transport direction (A) in order to provide each container (3) in a row of containers (3) with the shrink sleeve (4) one after the other, the row of containers (3) being arranged in the transverse direction (B) to the transport direction (A), and the sleeving head (1) being movable over the row of containers (3) in a direction (B) perpendicular to the transport direction (A) in order to eject faulty shrink sleeves (4).

2. Device according to claim 1, **characterized in that** the transport system has cell boards (2) which have a plurality of receiving openings (5) in which a container (3) is arranged in each case.

3. Device according to claim 2, **characterized in that** the transport system comprises a linear motor (7) which moves the cell boards (2) in the transport direction (A) in a controlled manner.

4. Device according to any of claims 1 to 3, **characterized in that** the sleeving head (1) can move in the transverse direction (B) to over a waste container (6) next to the transport system.

5. Device according to any of claims 1 to 4, **characterized in that** at least two sleeving heads (1, 11) are provided one behind the other in the transport direction (A) and in parallel with one another, which sleeving heads simultaneously provide at least two rows of containers (3) with shrink sleeves (4).

6. Device according to claim 5, **characterized in that** the at least two sleeving heads (1, 11) are moved in the transverse direction (B) in opposite directions.

7. Method for applying a shrink sleeve (4) to a container (3), comprising the following steps:
a) moving a plurality of containers (3), which are arranged in a row, in the transport direction (A) into the working region of at least one sleeving head (1) by means of a transport system;
b) applying the shrink sleeve (4) to each container (3), **characterized by**
c) moving the sleeving head (1) in a direction (B) transverse to the transport direction (A) in order to provide each container (3) in a row of containers (3) with the shrink sleeve (4) one after the other, the row of containers (3) being arranged in the transverse direction (B) to the transport direction (A); **and by**
d) cyclically or continuously repeating steps a) to c) in order to provide the next row of containers (3) with shrink sleeves (4).

8. Method according to claim 7, **characterized by**
e) moving the sleeving head (1) over the row of containers (3) in a direction (B) perpendicular to the transport direction (A) in order to eject faulty shrink sleeves (4) into a waste container (6).

9. Method according to either claim 7 or claim 8, **characterized by**
f) providing at least one second sleeving head (11), which moves in parallel with the first sleeving head (1), in order to simultaneously apply shrink sleeves (4) to at least one second row of containers (3).

10. Method according to claim 9, **characterized by**
g) moving the at least second sleeving head (11) in the opposite direction relative to the first sleeving head (1).

11. Method according to any of claims 7 to 9, **characterized by**
h) providing 2-n sleeving heads which are parallel to one another in order to simultaneously apply shrink sleeves (4) to 2-n rows of containers (3).

12. Method according to any of claims 7, 8 and 10, **characterized by**
i) providing 2-n sleeving heads, the sleeving heads of the even rows moving in the opposite direction to the sleeving heads of the odd rows.

## Revendications

1. - Dispositif pour l'application d'étiquettes rétractables (4) sur des récipients (3), comportant un système de transport pour le déplacement des récipients (3) dans la zone de travail d'au moins une tête de manchonnage (1) qui applique une étiquette rétractable (4) sur chacun des récipients (3), **caractérisé par le fait que** la tête de manchonnage (1) est déplaçable dans une direction (B) transversale à la direction de transport (A) pour munir chaque récipient (3) d'une rangée de récipients (3) l'un après l'autre de l'étiquette rétractable (4), la rangée de récipients (3) étant disposée dans une direction (B) transversale à la direction de transport (A), et la tête de manchonnage (1) étant déplaçable au-delà de la rangée de récipients (3) dans la direction (B) perpendiculaire à la direction de transport (A) pour éjecter des étiquettes rétractables (4) défectueuses.

2. - Dispositif selon la revendication 1, **caractérisé par le fait que** le système de transport présente des panneaux alvéolés (2) qui présentent une pluralité d'ouvertures de réception (5) dans chacune desquelles est disposé un récipient (3).

3. - Dispositif selon la revendication 2, **caractérisé par le fait que** le système de transport comporte un moteur linéaire (7) qui déplace de manière contrôlée les panneaux alvéolés (2) dans la direction de transport (A).

4. - Dispositif selon l'une des revendications 1 à 3, **caractérisé par le fait que** la tête de manchonnage (1) est déplaçable dans la direction transversale (B) jusqu'au-dessus d'un conteneur à déchets (6) à côté du système de transport.

5. - Dispositif selon l'une des revendications 1 à 4, **caractérisé par le fait qu'**il est prévu, dans la direction de transport (A), l'une derrière l'autre et parallèlement l'une à l'autre, au moins deux têtes de manchonnage (1, 11) qui munissent simultanément d'étiquettes rétractables (4) au moins deux rangées de récipients (3).

6. - Dispositif selon la revendication 5, **caractérisé par le fait que** lesdites au moins deux têtes de manchonnage (1, 11) sont déplacées en sens inverse dans la direction transversale (B).

7. - Procédé pour l'application d'une étiquette rétractable (4) sur un récipient (3), comportant les étapes suivantes :
a) déplacement d'une pluralité de récipients (3) dans la direction de transport (A), qui sont disposés en une rangée, au moyen d'un système de transport dans la zone de travail d'au moins une tête de manchonnage (1) ;
b) application d'une étiquette rétractable (4) sur chacun des récipients (3), **caractérisée par**
c) le déplacement de la tête de manchonnage (1) dans une direction (B) transversale à la direction de transport (A) pour munir l'un après l'autre chaque récipient (3) d'une série de récipients (3) de l'étiquette rétractable (4), la série de récipients (3) étant disposée dans la direction transversale (B) par rapport à la direction de transport (A) ; et par
d) la répétition cadencée ou continue des étapes a) à c) pour munir la rangée suivante de récipients (3) d'étiquettes rétractables (4).

8. - Procédé selon la revendication 7, **caractérisé par**
e) le déplacement de la tête de manchonnage (1) au-delà de la rangée de récipients (3) dans la direction (B) perpendiculaire à la direction de transport (A) pour éjecter des étiquettes rétractables défectueuses (4) dans un récipient à déchets (6).

9. - Procédé selon l'une des revendications 7 ou 8, **caractérisé par**
f) la disposition d'au moins une deuxième tête de manchonnage (11) qui se déplace parallèlement à la première tête de manchonnage (1) pour appliquer des étiquettes rétractables (4) simultanément au moins sur une deuxième rangée de récipients (3).

10. - Procédé selon la revendication 9, **caractérisé par**
g) le déplacement en sens inverse de ladite au moins une deuxième tête de manchonnage (11) par rapport à la première tête de manchonnage (1).

11. - Procédé selon l'une des revendications 7 à 9, **caractérisé par**
h) la disposition de 2n têtes de manchonnage qui sont disposées parallèlement l'une à l'autre pour appliquer des étiquettes rétractables (4) simultanément sur 2n rangées de récipients (3).

12. - Procédé selon l'une des revendications 7, 8 et 10, **caractérisé par**
i) la disposition de 2n têtes de manchonnage, les têtes de manchonnage des rangées de nombre pair se déplaçant en sens inverse par rapport aux têtes de manchonnage des rangées de nombre impair.
